# FASCICULE DE BREVET EUROPEEN

(11) **EP 2 602 193 B1**
(45) Date de publication et mention de la délivrance du brevet: **11.02.2015**
(21) Numéro de dépôt: 12195549.6
(22) Date de dépôt: 04.12.2012
(51) Int. Cl.: B64F 5/00

(54) **Outillage d'aide à la construction et à la maintenance des aéronefs**
Tool for assisting with aircraft construction and maintenance
Substitution device for aircraft engine

(30) Priorité: 08.12.2011 FR 1161302
(43) Date de publication de la demande: 12.06.2013
(73) Titulaire: Airbus Opérations SAS, 31060 Toulouse (FR)
(72) Inventeur: Garric, Stéphane, 31130 Balma (FR); Vigneau, Philippe, 31600 Seysses (FR)
(74) Mandataire: Gicquel, Olivier Yves Gérard

(56) Documents cités:
- EP-A1- 1 878 662
- US-A1- 2011 265 327
- US-B1- 6 170 141

## Description

### DOMAINE TECHNIQUE

La présente invention est relative aux dispositifs de substitution de moteur d'aéronef, en particulier pour des turboréacteurs.

Ces dispositifs de substitution peuvent être considérés comme des outillages d'aide à la construction et à la maintenance des aéronefs (voir par exemple le document US6170141). En situation normale, lesdits moteur d'aéronef sont habituellement fixés à un mât support et protégés par une nacelle qui comprend des capots moteurs qui entourent le moteur.

### ETAT DE LA TECHNIQUE ANTERIEURE

Selon l'art antérieur connu, il arrive qu'un (ou plusieurs) moteur(s) d'un aéronef doive être démonté pour une intervention technique sur ledit moteur ou un remplacement de moteur. Cependant, pour déposer un moteur, il faut au préalable ouvrir des capots moteurs qui font partie de la nacelle. Il est connu dans le métier que, lorsque lesdits capots moteurs sont en position ouverte, l'aéronef ne doit pas être déplacé sous peine de risquer d'endommager lesdits capots moteurs ou les éléments environnants. De plus, si lesdits capots moteurs sont placés dans leur position fermée (qui est la position normale lorsque le moteur est en service) alors que le moteur est absent, l'aéronef ne doit pas non plus être déplacé sous peine de risquer d'endommager lesdits capots moteurs les uns contre les autres, car ils ne sont pas maintenus par le moteur.

Il est à noter que dans le présent document, les capots moteurs pourront être désignés indifféremment par 'capots de protection' ou simplement 'capots'.

La présente invention a pour but d'apporter au moins en partie une solution aux problèmes de l'art antérieur susmentionnés.

### EXPOSÉ DE L'INVENTION

La présente invention propose un dispositif de substitution (autrement dit un 'faux moteur'), destiné à venir se substituer à un moteur d'aéronef de type turboréacteur, à l'intérieur d'un ensemble de propulsion comprenant par ailleurs une nacelle et ayant un axe principal.

Ladite nacelle comprend au moins une paire de capots de protection du moteur, et l'ensemble de propulsion comprend un mât support moteur ayant au moins deux attaches moteur, lesdits capots de protection étant montés chacun pivotant autour d'un axe sensiblement parallèle à l'axe principal, entre une position ouverte et une position fermée.

Le dispositif de substitution comprend :
- un corps s'étendant selon un premier axe, adapté pour être positionné sensiblement parallèlement à l'axe principal,
- des ancrages solidaires du corps, adaptés pour être fixés aux attaches moteur du mât support moteur,
- des portions de portée sur lesquelles peuvent reposer les capots de protection.

Grâce à ces dispositions, on peut refermer les capots de protection sur ledit dispositif de substitution et sécuriser les capots de protection dans cette position pour ensuite pouvoir déplacer l'aéronef sur ses roues sans risquer d'endommager lesdits capots moteurs.

Dans divers modes de réalisation de l'invention, on peut éventuellement avoir recours en outre à l'une et/ou à l'autre des dispositions qui suivent.

Selon un aspect, les portions de portée peuvent être agencées sensiblement sur un arc de cercle. De sorte les capots moteurs peuvent reposer sur plusieurs points de cet arc de cercle.

Selon un aspect concernant les capots de protection moteurs, ladite paire de capots de protection forme une première paire de capots dits d'inverseurs ayant une première série de portions d'appui, et la nacelle peut comprendre une seconde paire de capots dit 'de soufflante' ayant une seconde série de portions d'appui, les portions de portée du dispositif de substitution peuvent comprendre une première série de portions de portée adaptées pour recevoir lesdites portions d'appui de la première série de portions d'appui et une seconde série de portions de portée adaptées pour recevoir lesdites portions d'appui de la seconde série de portions d'appui. Moyennant quoi les capots d'inverseurs et les capots de soufflante peuvent chacun être refermés et sécurisés pour autoriser le déplacement de l'aéronef.

Selon un autre aspect de l'invention, les portions de portée de la première série de portions de portée peuvent être agencées sensiblement sur un arc de cercle dans un premier plan transversal sensiblement perpendiculaire au premier axe, et les portions de portée de la seconde série de portions de portée peuvent être agencées sensiblement sur un arc de cercle dans un second plan transversal sensiblement perpendiculaire au premier axe. De sorte que l'interface mécanique entre les capots moteurs et le dispositif de substitution est tout-à-fait similaire à l'interface mécanique entre les capots moteur et le moteur lorsque celui-ci est en configuration de service.

Selon un autre aspect, les portions de portée peuvent être au moins partiellement escamotables.

Selon un autre aspect, les portions de portée de la seconde série de portions de portée peuvent être portées par une pluralité de bras repliables. Moyennant quoi l'encombrement du dispositif de substitution peut être diminué, en particulier lorsque le dispositif de substitution n'est pas installé dans l'ensemble de propulsion.

Selon un autre aspect, le dispositif de substitution peut comprendre en outre un groupe hydraulique et des vérins, adaptés pour relier le dispositif de substitution à chaque paire de capots. Moyennant quoi la manoeuvre des capots moteurs peut être assistée par un système hydraulique.

Selon un autre aspect, le dispositif de substitution peut comprendre en outre des roues et un timon. De sorte que le dispositif de substitution peut être facilement déplacé.

Selon un autre aspect, le dispositif de substitution peut comprendre en outre des chapes de levage. Selon un autre aspect, les chapes peuvent être rabattables. Moyennant quoi les chapes de levage peuvent être rabattues pour ne pas gêner la fermeture des capots moteurs.

Selon un autre aspect, le dispositif de substitution est agencé de telle manière que son centre de gravité est localisé au voisinage du centre de gravité du moteur auquel il se substitue dans l'ensemble de propulsion. Moyennant quoi, lorsque le dispositif de substitution est installé dans l'ensemble de propulsion, l'équilibre de l'aile et de l'aéronef est similaire à la configuration normale avec un moteur installé dans l'ensemble de propulsion.

Selon un autre aspect, le dispositif de substitution peut comprendre en outre un inclinomètre. De sorte que l'on peut surveiller et contrôler l'inclinaison du dispositif de substitution pendant qu'on le soulève pour venir l'installer dans l'ensemble de propulsion.

Selon un autre aspect, le dispositif de substitution peut comprendre en outre un dynamomètre agencé sur un support de chape de levage. De sorte que l'on peut surveiller l'effort de levage du dispositif de substitution pendant qu'on le soulève pour venir l'installer dans l'ensemble de propulsion.

L'invention vise également un procédé pour faciliter un déplacement d'un aéronef prévu pour être motorisé par au moins un ensemble de propulsion à turbomoteur, dans lequel au moins un turbomoteur a été déposé sur un ensemble de propulsion, dans lequel ledit ensemble de propulsion comprend une nacelle avec au moins deux capots moteurs montés pivotants pour donner accès au moteur lorsqu'ils sont ouverts, lesdits capots moteurs étant dans leur position ouverte,
le procédé comprenant les étapes :
/a/- installer et fixer un dispositif de substitution en lieu et place du turbomoteur, le dispositif de substitution comprenant au moins deux ancrages adaptés pour être fixés à des attaches moteur d'un mât support moteur, et des portions de portée sur lesquelles peuvent reposer les capots moteurs ,
/c/- refermer chaque capot moteur,
/d/- autoriser le déplacement de l'aéronef.

Grâce à cette méthode et au moyen du dispositif de substitution, on peut refermer les capots moteurs sur ledit dispositif de substitution pour ensuite pouvoir déplacer l'aéronef sur ses roues sans risquer d'endommager lesdits capots moteurs.

Selon un aspect de l'invention, l'étape /a/ peut faire appel à un dispositif de treuillage installé temporairement ou à une plateforme élévatrice pour élever le dispositif de substitution vers la position de substitution.

Selon un autre aspect de l'invention, le dispositif de substitution peut comprendre des vérins et le procédé peut alors comporter en outre l'étape suivante avant l'étape /c/, à savoir :
/b/- attacher les vérins respectivement aux capots moteurs, de sorte que la manoeuvre peut être assistée hydrauliquement.

Selon un autre aspect de l'invention, la nacelle peut comporter une première paire de capots moteur dits capots d'inverseurs et une seconde paire de capots moteur dits capots de soufflante, l'étape /c/ du procédé comprenant les sous étapes :
/c1/- fermer les capots inverseurs,
/c2/- fermer les capots de soufflante. De sorte que les capots d'inverseurs et les capots de soufflante peuvent chacun être refermés et sécurisés pour autoriser un déplacement de l'aéronef.

Selon un autre aspect de l'invention, le dispositif de substitution peut comprendre un groupe hydraulique et une unité de séquence, les étapes /c1 / et /c2/ peuvent alors être opéré sous le contrôle de ladite unité de séquence. De sorte que de fausses manoeuvres éventuelles peuvent être évitées.

### BRÈVE DESCRIPTION DES DESSINS

D'autres aspects, buts et avantages de l'invention apparaîtront à la lecture de la description suivante un mode de réalisation de l'invention, donné à titre d'exemple non limitatif. L'invention sera également mieux comprise en regard des dessins joints sur lesquels :
- la figure 1 illustre schématiquement un ensemble de propulsion pour aéronef, avec le moteur présent et les capots moteurs ouverts,
- la figure 2 est une vue en perspective d'un dispositif de substitution selon un mode de réalisation de l'invention,
- la figure 3 montre un ensemble de propulsion pour aéronef sans son moteur, les capots moteurs étant ouverts, et un dispositif de substitution prêt à être installé en lieu et place du moteur,
- la figure 4 est analogue à la figure 3 et montre ce même dispositif de substitution en position installé en lieu et place du moteur,
- la figure 5 montre le dispositif de substitution installé en lieu et place du moteur, les capots d'inverseurs étant refermés,
- la figure 6 est analogue à la figure 4, avec les capots d'inverseurs et les capots soufflante refermés,
- la figure 7 illustre un détail d'une zone portant les premières portions de portée,
- la figure 8 est une vue en perspective du dispositif de substitution de la Figure 2, en position de transport, et
- la figure 9 montre un détail de l'interface entre une portion d'appui et une portion de portée.

### EXPOSÉ DÉTAILLÉ DE L'INVENTION

Sur les différentes figures, les mêmes références désignent des éléments identiques ou similaires.

Dans toute la description qui va suivre, par convention, les termes « avant » et « arrière » sont à considérer par rapport à une direction d'avancement de l'aéronef rencontrée suite à la poussée exercée par ses moteurs, cette direction correspondant aux X croissants (X+)

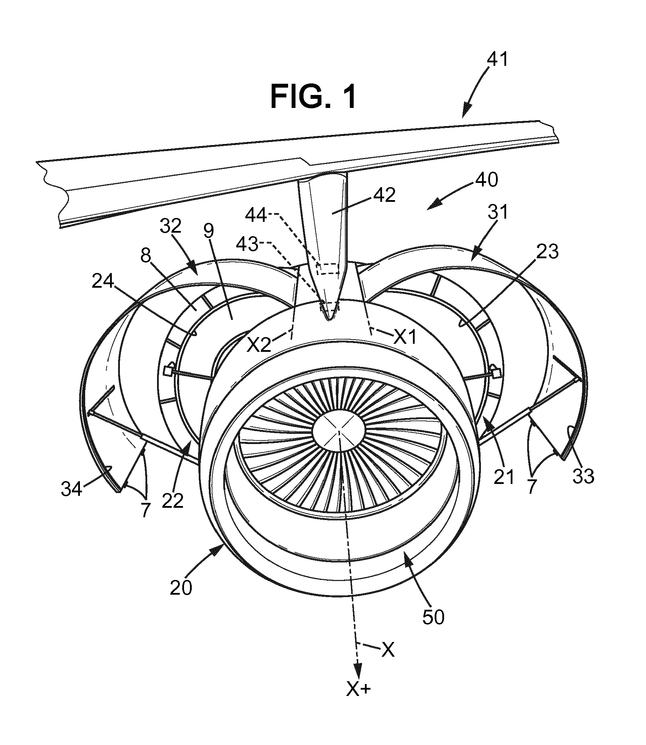

La figure 1 montre schématiquement un ensemble de propulsion **40** pour aéronef. Dans l'exemple illustré, ledit ensemble de propulsion **40** comprend une turbomachine **50** de type turboréacteur, qui sera appelé dans la suite 'moteur' **50** de manière générique.

L'ensemble de propulsion **40** comprend un mât support moteur **42** qui relie le moteur **50** à la voilure **41** de l'aéronef. Dans la configuration donnée en exemple, le moteur est agencé en dessous de l'aile, et généralement, le moteur **50** est décalé vers l'avant par rapport à l'aile. De plus, le mât support moteur **42** comprend au moins deux attaches moteur **43,44** pour accrocher le moteur **50** au mât support moteur **42.**

L'ensemble de propulsion **40** comprend par ailleurs une nacelle **20** qui comprend des parties enveloppant le moteur **50.** En particulier, la nacelle comprend des carénages aérodynamiques, et peut supporter ou inclure des équipements auxiliaires du moteur.

Le moteur **50** et sa nacelle **20** s'étendent le long d'un axe principal **X,** généralement confondu avec l'axe longitudinal de l'aéronef.

La nacelle **20** comprend au moins une paire de capots de protection **21,22** (aussi appelés capots moteurs) qui s'étendent circonférentiellement autour du moteur **50,** afin notamment de protéger le moteur de l'environnement extérieur et aussi de favoriser la performance aérodynamique de l'ensemble de propulsion **40.**

En l'occurrence, dans l'exemple illustré ici, la nacelle **20** comprend deux paires de capots de protection, à savoir une première paire de capots dits capots d'inverseurs **21,22** et une seconde paire de capots dit capots de soufflante **31,32.**

Un premier capot d'inverseur **21** (ici le gauche) est monté pivotant autour d'un premier axe de capot **X1** tandis qu'un second capot d'inverseur **22** (ici le droite) est monté pivotant autour d'un second axe de capot **X2.**

Les axes de capots **X1** et **X2** sont de préférence parallèles à l'axe principal **X,** mais ils pourraient s'en écarter légèrement.

Un premier capot de soufflante **31** (ici le gauche) est monté pivotant autour d'un axe parallèle ou confondu avec le premier axe de capot **X1** tandis qu'un second capot de soufflante **32** (ici le droite) est monté pivotant autour d'un axe parallèle ou confondu avec le second axe de capot **X2.**

La figure 1 montre les capots moteurs **21,22,31,32** en position ouverte, c'est-à-dire une position qui autorise l'accès aux parties inférieure et latérale du moteur pour des motifs de maintenance, d'inspection ou autre.

En position normale d'utilisation de l'ensemble de propulsion **40,** les capots **21,22,31,32** sont dans une position fermée, position dans laquelle les capots sont disposés sensiblement circonférentiellement autour du moteur ; la nacelle 20 présente alors une section extérieure quasi circulaire ou légèrement ovoïde.

Dans l'exemple illustré, chaque capot de soufflante **31,32** se présente comme un flasque de faible épaisseur de forme globalement semi cylindrique, de préférence en alliage d'aluminium.

Dans l'exemple illustré, chaque capot d'inverseur **21,22** se présente une structure épaisse de forme globalement semi cylindrique, ce capot d'inverseur comprenant une partie radialement intérieure **9** évidée qui sert de passage à une partie de flux d'air secondaire, et une partie radialement extérieure **8** qui contient un mécanisme d'inversion de poussée destiné à dévier au moins une partie du flux d'air secondaire vers l'avant de l'aéronef.

Les capots **21,22,31,32** comportent chacun respectivement des portions d'appui 23,24,33,34 qui seront détaillées plus loin et qui s'appuient, lorsque les capots sont en position fermée, sur des zones spécifiques du moteur prévues à cet effet (non représentées en détail sur la figure 1).

Des verrous de fermeture **7** permettent de verrouiller chacun des capots en position fermée ; ainsi, la position fermée est sécurisée pour toutes les phases normales d'utilisation de l'aéronef y compris les phases de vol.

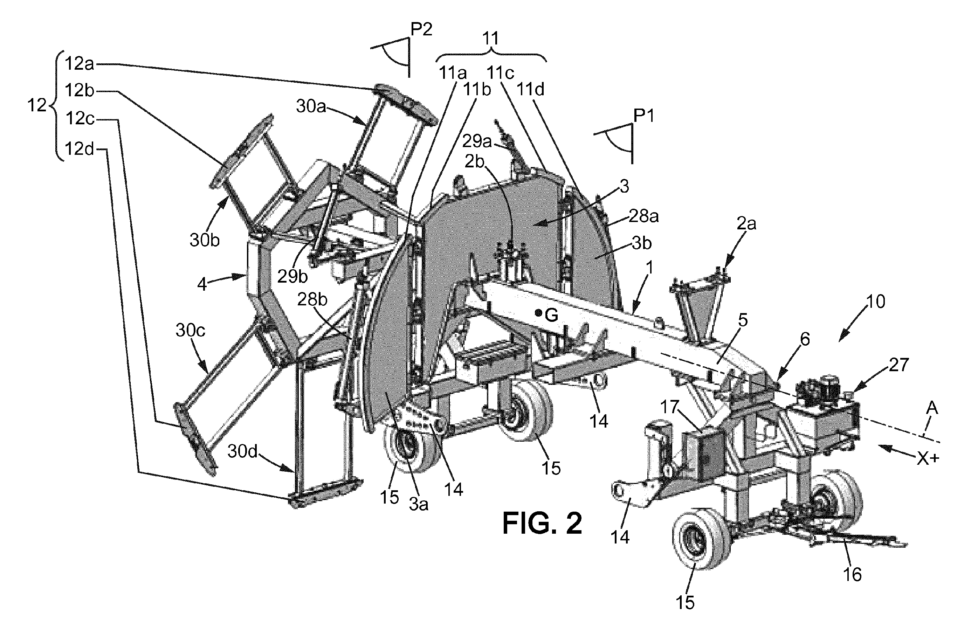

En référence à la figure 2, il est présente un dispositif de substitution **10,** destiné à venir se substituer au moteur **50.** Ce dispositif de substitution peut être considéré comme un outillage d'aide à la construction et à la maintenance des aéronefs, il peut aussi être appelé 'faux moteur' ou 'engine dummy'.

Le dispositif de substitution **10** comprend notamment un corps **1** s'étendant selon un premier axe **A.** Ce premier axe A pourra être sensiblement aligné avec l'axe principal **X,** en vue de l'installation du dispositif de substitution 10 dans l'ensemble de propulsion **40.** Dans l'exemple illustré, le corps 1 prend la forme d'une poutre, mais il pourrait prendre toute autre forme.

Le dispositif de substitution **10** comprend en outre au moins deux ancrages **2a,2b,** solidaires du corps 1. Ces ancrages 2a,2b sont prévus pour être fixés aux attaches moteur 43,44 susmentionnées du mât support moteur, afin de fixer le dispositif de substitution 10 en lieu et place du moteur.

Le dispositif de substitution 10 comprend en outre des portions de portée **11,12** adaptées pour recevoir les portions d'appui 23,24,33,34 susdites appartenant aux capots de protection.

En l'occurrence, dans l'exemple illustré, les portions de portée 11,12 susmentionnées du dispositif de substitution 10 comprennent :
- une première série de portions de portée **11a,11b,11c,11d** adaptées pour recevoir les portions d'appui de la première série de portions d'appui **23,24** appartenant aux capots d'inverseurs, cette première série de portions de portée étant aussi appelée 'V-groove' dans le métier,
- une seconde série de portions de portée **12a,12b12c,12d** adaptées pour recevoir les portions d'appui de la seconde série de portions d'appui **33,34** appartenant aux capots de soufflante.

De préférence, comme illustré sur les figures, la première série 11 de portions de portée sont agencées sensiblement sur un arc de cercle dans un premier plan transversal **P1** sensiblement perpendiculaire au premier axe A. De préférence, la première série de portions de portée est disposé en zone périphérique d'une plaque **3.**

De même, comme illustré sur les figures, les portions de portée de la seconde série 12 de portions de portée sont agencées sensiblement sur un arc de cercle dans un second plan transversal **P2** sensiblement perpendiculaire au premier axe **A.** De préférence, la seconde série de portions de portée est reliée à une armature avant **4.** En l'occurrence, ladite armature avant **4** se présente comme des tubes mécano-soudés assemblés en forme générale de pentagone.

Par ailleurs, le dispositif de substitution **10** illustré comprend en outre des roues **15,** en l'occurrence quatre roues **15,** montées respectivement sur un essieu fixe et sur un essieu orientable **6.**

Avantageusement, un timon **16** peut optionnellement en outre être fixé audit essieu orientable 6, grâce à quoi le dispositif de substitution 10 peut être facilement déplacé et véhicule d'un endroit à un autre.

Selon une caractéristique optionnelle, le centre de gravité **G** dudit dispositif de substitution peut être localisé au voisinage du centre de gravité du moteur **50** auquel il se substitue dans l'ensemble de propulsion. Ainsi, lorsque le dispositif de substitution **10** est installé dans l'ensemble de propulsion, l'équilibre de l'aile et de l'aéronef est similaire à la configuration normale avec un moteur installé dans l'ensemble de propulsion **40.**

De plus, le poids du dispositif de substitution **10** sera choisi de telle sorte qu'il soit équivalent au poids du moteur qu'il est destiné à remplacer. Ainsi, si un seul moteur est substitué par un dispositif de substitution, alors l'équilibre droite-gauche de l'appareil n'est pas modifié substantiellement. Par exemple, le dispositif de substitution peut peser entre 2 et 5 tonnes suivant le type de moteur qu'il est censé remplacer.

Selon une caractéristique optionnelle, le dispositif de substitution 10 peut comprendre en outre des chapes de levage **14.** Ici en l'occurrence, il est proposé quatre chapes de levage qui correspondent chacune à un point de treuillage comme il sera vu en détails ci-après. Avantageusement ces chapes 14 peuvent être rabattables, par exemple vers le haut, ceci afin de ne pas gêner la cinématique de fermeture des capots, notamment des capots d'inverseurs 31,32.

Des dispositions particulières peuvent être prévues pour faciliter la manutention et le déplacement du dispositif de substitution 10.

En particulier, selon un aspect optionnel avantageux, les portions de portée de la seconde série **12** de portions de portée sont portées par une pluralité de bras repliables **30a,30b,30c,30d,30e.** La base de chaque bras est relié par une articulation à rotation sur un côté de la structure mécano-soudée pentagonale **4** déjà décrite plus haut. Chaque bras peut être pivoté à angle droit en s'écartant du plan P2 pour rejoindre une position sensiblement longitudinale.

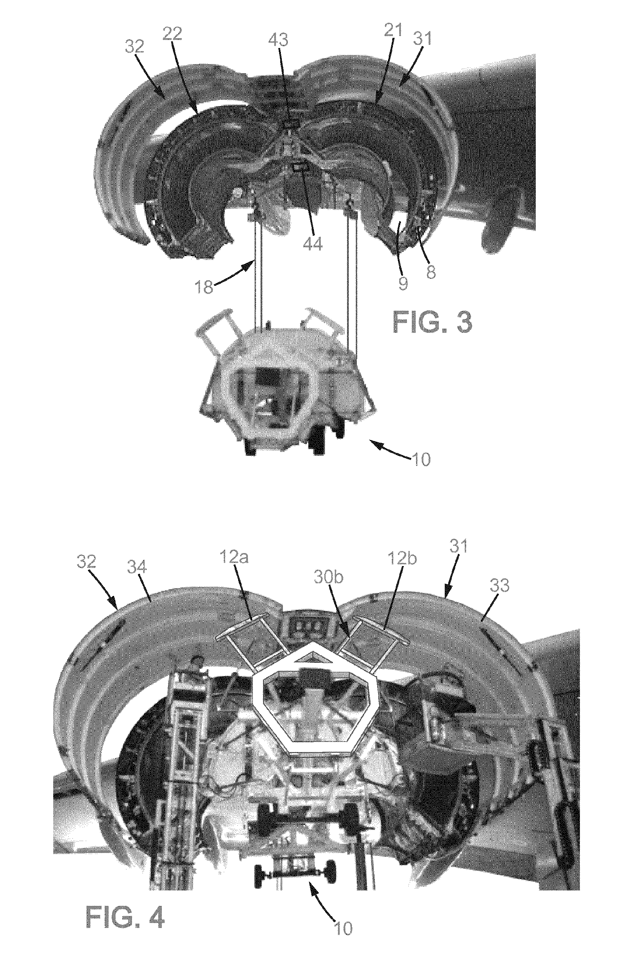

En particulier, comme ceci est illustré aux figures 3, 4 et 8, les trois bras 30c,30d,30e s'étendant vers le bas peuvent être repliés pour le roulage du dispositif de substitution 10 sur le sol.

De plus, la plaque 3 peut comporter deux portions latérales repliables 3a,3b montées à rotation autour d'un axe sensiblement vertical.

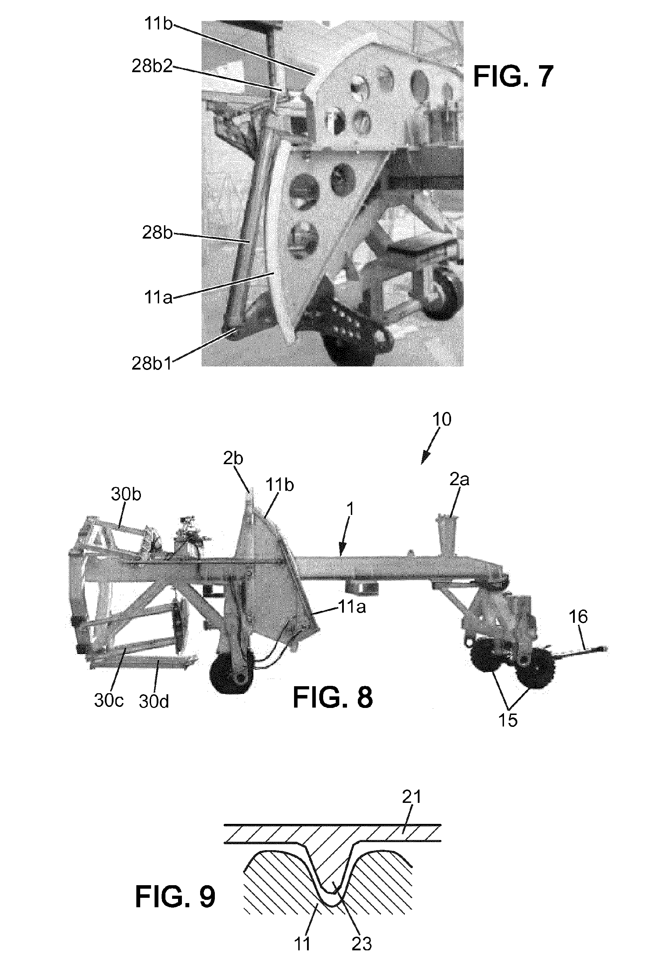

La Figure 8 montre le dispositif de substitution 10 avec les cinq bras repliables **30a-30e** en position repliée et les deux portions latérales repliables 3a,3b en position repliée. Ainsi, l'encombrement du dispositif de substitution 10 est minimal, et ce dispositif de substitution 10 peut être transporté sur un camion par la route sans dépasser les dimensions de gabarit standard pour le transport routier.

Le dispositif de substitution 10 illustré ici comprend en outre un groupe hydraulique **27** et des vérins 28a,28b,29a,29b pour relier le dispositif de substitution 10 à chaque paire de capots.

Un premier vérin 28b permet de relier le dispositif de substitution 10 au premier capot inverseur 21. Un second vérin 28a permet de relier le dispositif de substitution 10 au second capot inverseur 22. Ces deux vérins 28a,28b sont situés dans un plan proche du plan P1.

Un troisième vérin 29b permet de relier le dispositif de substitution 10 au premier capot de soufflante 31. Un quatrième vérin 29a permet de relier le dispositif de substitution 10 au second capot de soufflante 32.

Ces vérins de liaison **28a,28b,29a,29b** ont une nature et une disposition similaire aux vérins disposés sur le moteur 50 et visibles en partie sur la figure 1.

Chaque vérin comporte une extrémité proximale, par exemple l'extrémité **28b1** sur la figure 7, fixée au dispositif de substitution 10, et une extrémité distale, par exemple l'extrémité **28b2** sur la figure 7, destinée à être fixée au capot situé en vis-à-vis.

Le groupe hydraulique **27** alimente ces vérins en pression hydraulique, sous les ordres d'un boitier de commande **17.** Ce boitier de commande peut être un boitier de commande manuel avec des boutons poussoir et une logique câblée simple, mais il peut aussi comprendre et une unité de séquence, qui permet de vérifier le déroulement des opérations et le respect d'une ou plusieurs séquences prédéfinies. Ainsi de fausses manoeuvres éventuelles peuvent être évitées.

Les figures 3 et 4 illustrent la manoeuvre d'installation du dispositif de substitution **10** en lieu et place du moteur **50.** Le dispositif de substitution 10 est amené dans un premier temps à l'aplomb du mat support moteur 42, par exemple par roulage et au moyen d'un engin tracteur.

On installe un système de treuillage provisoire **18,** aussi appelé 'Bootstrap', muni de quatre palans. On attache ensuite les chaines de chaque palan aux chapes de levage **14** du dispositif de substitution **10** déjà mentionnées plus haut.

Après levage du dispositif de substitution **10,** on attache les ancrages **2a,2b** aux attaches moteur **43,44** avec des moyens similaires à ceux utilisés pour attacher le moteur, comme ceci est illustré à la figure 4.

Une fois le verrouillage des attaches 2a,2b effectué, on peut enlever le système de treuillage provisoire **18.**

Il est à noter que ce système de treuillage provisoire **18** est aussi utilisé pour la dépose et la repose du moteur 50 lui-même. Cependant, une alternative au système de treuillage décrit est d'utiliser une plateforme élévatrice de gabarit et puissance suffisante pour recevoir et soulever le dispositif de substitution 10.

Après verrouillage du dispositif de substitution 10 sur les attaches du mat support moteur, on attache l'extrémité distale de chaque vérin hydraulique **28a,28b,29a,29b** au capot correspondant qui se trouve en vis-à-vis.

On peut alors enlever des bielles spécifiques amovibles qui permettent de maintenir les capots ouverts sans moteur ni dispositif substitution dans l'ensemble de propulsion 40 ; ces bielles seront détaillées plus loin.

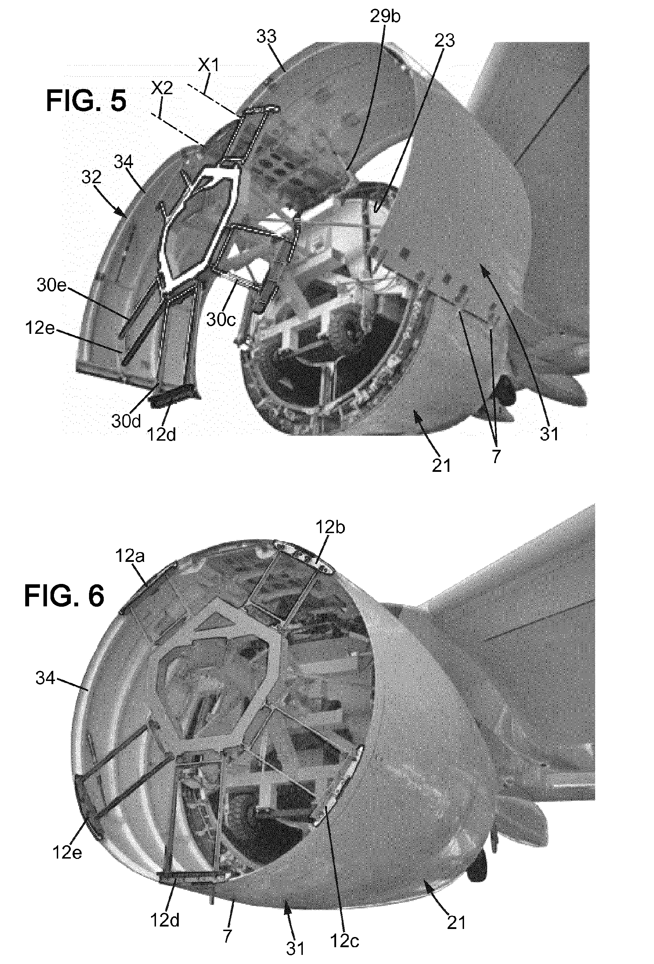

Ensuite, on ferme les capots inverseurs **21,22,** comme ceci est illustré sur la Figure 5. Le pilotage des vérins **28a,28b** peut être simultané ou décalé ; de même il peut être piloté manuellement ou par un séquence automatique.

Ensuite, on ferme les capots de soufflante **31,32,** comme ceci est illustré sur la Figure 6. Le pilotage des vérins **29a,29b** peut être simultané ou décalé ; de même il peut être piloté manuellement ou par un séquence automatique.

Après fermeture des quatre capots, on peut procéder au verrouillage des verrous de capots inférieurs, au moyen des verrous **7** déjà mentionnés et visibles sur la figure 6.

A ce moment, on peut alors autoriser le déplacement de l'aéronef, sans craindre d'endommager les capots de soufflante ou d'inverseurs.

On peut donc résumer le procédé présenté en étapes comme suit, concernant un ensemble de propulsion dépourvu de son turbomoteur, avec les capots moteurs ouverts, et un dispositif de substitution, tel que défini ci-dessus, destiné à venir se substituer au moteur absent,
/**a**/- installer le dispositif de substitution en lieu et place du turbomoteur,
/**b**/**-** (étape optionnelle) attacher les vérins respectivement aux capots moteurs,
/**c**/**-** refermer les au moins deux capots moteurs,
/**d**/**-** autoriser le déplacement de l'aéronef.

De préférence, l'étape de fermeture des capots sera séquencée en deux sous-étapes :
/**c1**/- fermer les capots inverseurs **21,22,**
/**c2**/**-** fermer les capots de soufflante **31,32.**

Bien entendu, lorsque l'on veut déposer le dispositif de substitution **10** pour remettre en place un moteur, on procède dans l'ordre inverse, à savoir on ouvre les capots de soufflante d'abord, puis ensuite on ouvre les capots inverseurs.

La figure 9 montre le principe de l'interface entre une portion d'appui **23** et une portion de portée **11a.** La portion d'appui se présente comme un doigt qui vient s'insérer dans une portion en forme de gorge. Ainsi, lorsque le doigt 23 est dans la gorge, tout mouvement longitudinal du capot est empêché. Le verrouillage des verrous de capots **7** permet de maintenir cette position fermement.

Bien entendu, tout autre système d'accostage mécanique est envisageable.

Selon une caractéristique optionnelle, le dispositif de substitution **10** peut comprendre en outre un inclinomètre. Ainsi, on peut surveiller et contrôler l'inclinaison du dispositif de substitution pendant qu'on le soulève pour venir l'installer dans l'ensemble de propulsion.

Selon une caractéristique optionnelle, le dispositif de substitution peut comprendre en outre un dynamomètre agencé sur un support de chape de levage. Ainsi, on peut surveiller l'effort de levage du dispositif de substitution pendant qu'on le soulève pour venir l'installer dans l'ensemble de propulsion. Il est à noter que, selon une caractéristique optionnelle, le système de treuillage provisoire (aussi appelé 'Bootstrap') peut lui aussi comprendre en outre un dynamomètre.

Il est à noter que lorsque ni le moteur ni le dispositif de substitution 10 sont présents en position dans l'ensemble de propulsion, alors les capots sont maintenus ouverts par des bielles spécifiques amovibles prévues à cet effet. Une première paire de bielle relie les capots inverseurs 21,22 au mat support moteur 42.

Une seconde paire de bielles relie les capots de soufflante au mat support moteur 42 ou aux capots inverseurs 21,22 déjà en position ouverte. Lesdites bielles sont agencées pour ne pas gêner l'installation du moteur ou du dispositif de substitution 10 dans l'ensemble de propulsion 40.

La présente invention ne se limite pas aux formes de réalisation décrites ci-dessus à titre d'exemples non limitatifs. Elle concerne également toutes les variantes de réalisation à la portée de l'homme de l'art dans le cadre des revendications ci-après.

## Revendications

1. Dispositif de substitution (10), destiné à venir se substituer à un moteur d'aéronef (50) à l'intérieur d'un ensemble de propulsion (40) comprenant par ailleurs une nacelle (20) et ayant un axe principal (X),
ladite nacelle comprenant au moins une paire de capots de protection (21,22) du moteur, et l'ensemble de propulsion comprenant un mât support moteur (42) ayant au moins deux attaches moteur (43,44), lesdits capots de protection étant montés chacun pivotant autour d'un axe (X1,X2) sensiblement parallèle à l'axe principal, entre une position ouverte et une position fermée,
le dispositif de substitution (10) comprenant :
- un corps (1) s'étendant selon un premier axe (A), adapté pour être positionné sensiblement parallèlement à l'axe principal (X), **caractérisé en ce que** le dispositif comprend:
- au moins deux ancrages (2a,2b) solidaires du corps, et adaptés pour être fixés aux attaches moteur (43,44) du mât support moteur,
- des portions de portée (11,12) sur lesquelles peuvent reposer les capots de protection.

2. Dispositif de substitution selon la revendication 1, dans lequel les portions de portée (11,12) sont agencées sensiblement sur un arc de cercle.

3. Dispositif de substitution selon l'une des revendications 1 à 2, dans lequel la paire de capots de protection forme une première paire de capots dits d'inverseurs (21,22), ayant une première série de portions d'appui (23,24), et la nacelle comprend une seconde paire de capots dit de soufflante (31,32) ayant une seconde série de portions d'appui (33,34),
et/ou dans lequel les portions de portée (11,12) du dispositif de substitution (10) comprennent une première série de portions de portée (11a,11b,11c,11d) adaptées pour recevoir lesdites portions d'appui de la première série de portions d'appui (23,24) et une seconde série de portions de portée (12a,12b12c,12d) adaptées pour recevoir lesdites portions d'appui de la seconde série de portions d'appui (33,34).

4. Dispositif de substitution selon la revendication 3, dans lequel les portions de portée de la première série de portions de portée sont agencées sensiblement sur un arc de cercle dans un premier plan transversal (P1) sensiblement perpendiculaire au premier axe (A),
dans lequel les portions de portée de la seconde série de portions de portée sont agencées sensiblement sur un arc de cercle dans un second plan transversal (P2) sensiblement perpendiculaire au premier axe.

5. Dispositif de substitution selon l'une des revendications 1 à 4, dans lequel les portions de portée sont au moins partiellement escamotables.

6. Dispositif de substitution selon l'une des revendications 1 à 5, comprenant en outre un groupe hydraulique (27) et des vérins (28), adaptés pour relier le dispositif de substitution à au moins la paire de capots.

7. Dispositif de substitution selon l'une des revendications 1 à 6, comprenant en outre des roues (15) et un timon (16).

8. Dispositif de substitution selon l'une des revendications 1 à 7, agencé de telle manière que son centre de gravité (G) est localisé au voisinage du centre de gravité du moteur auquel il se substitue dans l'ensemble de propulsion.

9. Dispositif de substitution selon l'une des revendications 1 à 8, comprenant en outre des chapes de levage (14).

10. **Procédé** pour faciliter un déplacement d'un aéronef prévu pour être motorisé par au moins un ensemble de propulsion à turbomoteur avec nacelle, dans lequel au moins un turbomoteur a été déposé sur un ensemble de propulsion, dans lequel ledit ensemble de propulsion comprend une nacelle avec au moins deux capots moteurs (21,22) montés pivotants pour donner accès au moteur lorsqu'ils sont ouverts,
lesdits capots moteurs étant dans leur position ouverte,
le **procédé** comprenant **les étapes :**
/**a**/- installer et fixer un dispositif de substitution (10) en lieu et place du turbomoteur, le dispositif de substitution comprenant au moins deux ancrages (2a,2b) adaptés pour être fixés à des attaches moteur (43,44) d'un mât support moteur (42), et des portions de portée (11,12) sur lesquelles peuvent reposer les capots moteurs,
/**c**/**-** refermer chaque capot moteur,
/**d**/**-** autoriser le déplacement de l'aéronef.

11. Procédé selon la revendication 10, dans lequel le dispositif de substitution (10) comprend un vérin (28a,28b,29a29b) en vis-à-vis de chaque capot moteur et dans lequel le procédé comporte en outre l'étape suivante avant l'étape /**c**/ :
**/b/-** attacher les vérins respectivement aux capots moteurs en vis-à-vis.

12. Procédé selon l'une des revendications 10 à 11, dans lequel la nacelle (20) comporte une première paire de capots moteur dits d'inverseurs (21,22) et une seconde paire de capots moteur dit de soufflante (31,32), l'étape /c/ du procédé comprenant les sous étapes :
/**c1**/- fermer les capots inverseurs (21,22),
/**c2**/**-** fermer les capots de soufflante (31,32).

## Patentansprüche

1. Ersatzvorrichtung (10), die dazu bestimmt ist, einen Luftfahrzeugmotor (50) innerhalb einer Triebwerkseinheit (40) zu ersetzen, die außerdem eine Gondel (20) enthält und eine Hauptachse (X) hat,
wobei die Gondel mindestens ein Paar von Schutzhauben (21, 22) des Motors enthält, und die Triebwerkseinheit einen Motor-Trägermast (42) enthält, der mindestens zwei Motoraufhängungen (43, 44) hat, wobei die Schutzhauben je um eine Achse (X1, X2) im Wesentlichen parallel zur Hauptachse zwischen einer offenen Stellung und einer geschlossene Stellung schwenkbar montiert sind,
wobei die Ersatzvorrichtung (10) enthält:
- einen sich gemäß einer ersten Achse (A) erstreckenden Körper (1), der geeignet ist, um im Wesentlichen parallel zur Hauptachse (X) positioniert zu werden,
**dadurch gekennzeichnet, dass** die Vorrichtung enthält:
- mindestens zwei Verankerungen (2a, 2b), die fest mit dem Körper verbunden und geeignet sind, um an den Motoraufhängungen (43, 44) des Motor-Trägermasts befestigt zu werden,
- Auflageflächenabschnitte (11, 12), auf denen die Schutzhauben ruhen können.

2. Ersatzvorrichtung nach Anspruch 1, wobei die Auflageflächenabschnitte (11, 12) im Wesentlichen auf einem Kreisbogen angeordnet sind.

3. Ersatzvorrichtung nach einem der Ansprüche 1 bis 2, wobei das Paar von Schutzhauben ein erstes Paar von so genannten Schubumkehrerhauben (21, 22) formt, die eine erste Reihe von Auflageabschnitten (23, 24) haben, und die Gondel ein zweites Paar von so genannten Gebläsehauben (31, 32) enthält, die eine zweite Reihe von Auflageabschnitten (33, 34) haben,
und/oder wobei die Auflageflächenabschnitte (11, 12) der Ersatzvorrichtung (10) eine erste Reihe von Auflageflächenabschnitten (11a, 11b, 11c, 11d), die geeignet sind, um die Auflageabschnitte der ersten Reihe von Auflageabschnitten (23, 24) aufzunehmen, und eine zweite Reihe von Auflageflächenabschnitten (12a, 12b, 12c, 12d) enthalten, d i e geeignet sind, u m die Auflageabschnitte der zweiten Reihe von Auflageabschnitten (33, 34) aufzunehmen.

4. Ersatzvorrichtung nach Anspruch 3, wobei die Auflageflächenabschnitte der ersten Reihe von Auflageflächenabschnitten im Wesentlichen auf einem Kreisbogen in einer ersten Querebene (P1) im Wesentlichen lotrecht zur ersten Achse (A) angeordnet sind,
wobei die Auflageflächenabschnitte der zweiten Re i he von Auflageflächenabschnitten im Wesentlichen auf einem Kreisbogen in einer zweiten Querebene (P2) im Wesentlichen lotrecht zur ersten Achse angeordnet sind.

5. Ersatzvorrichtung nach einem der Ansprüche 1 bis 4, wobei die Auflageflächenabschnitte zumindest teilweise einziehbar sind.

6. Ersatzvorrichtung nach einem der Ansprüche 1 bis 5, die außerdem ein Hydraulikaggregat (27) und Arbeitszylinder (28) enthält, die geeignet sind, um die Ersatzvorrichtung mit mindestens dem Paar von Hauben zu verbinden.

7. Ersatzvorrichtung nach einem der Ansprüche 1 bis 6, die außerdem Räder (15) und eine Deichsel (16) enthält.

8. Ersatzvorrichtung nach einem der Ansprüche 1 bis 7, die so eingerichtet ist, dass ihr Schwerpunkt (G) sich in der Nähe des Schwerpunkts des Motors befindet, den sie in der Triebwerkseinheit ersetzt.

9. Ersatzvorrichtung nach einem der Ansprüche 1 bis 8, die außerdem Hebegabelgelenke (14) enthält.

10. Verfahren zur Vereinfachung einer Verschiebung eines Luftfahrzeugs, das vorgesehen ist, um durch mindestens eine Turbomotor-Triebwerkseinheit mit Gondel motorisiert zu werden, wobei mindestens ein Turbomotor auf eine Triebwerkseinheit aufgesetzt wurde, wobei die Triebwerkseinheit eine Gondel mit mindestens zwei Motorhauben (21, 22) enthält, die schwenkbar montiert sind, um Zugang zum Motor zu erlauben, wenn sie offen sind,
wobei die Motorhauben in ihrer offenen Stellung sind,
wobei das Verfahren die folgenden Schritte enthält:
/a/Einbau und Befestigung einer Ersatzvorrichtung (10) anstelle des Turbomotors, wobei die Ersatzvorrichtung mindestens zwei Verankerungen (2a, 2b), die geeignet sind, um an Motoraufhängungen (43, 44) eines Motor-Trägermasts (42) befestigt zu werden, und Auflageflächenabschnitte (11, 12) enthält, auf denen die Motorhauben ruhen können, /c/Schließen jeder Motorhaube,
/d/Erlauben der Verschiebung des Luftfahrzeugs.

11. Verfahren nach Anspruch 10, wobei die Ersatzvorrichtung (10) einen Arbeitszylinder (28a, 28b, 29a, 29b) gegenüber jeder Motorhaube enthält, und wobei das Verfahren außerdem den folgenden Schritt vor dem Schritt /c/ aufweist:
/b/Befestigen der Arbeitszylinder an den einander gegenüberliegenden Motorhauben.

12. Verfahren nach einem der Ansprüche 10 bis 11, wobei die Gondel (20) ein erstes Paar von Schubumkehrerhauben genannten Motorhauben (21, 22) und ein zweites Paar von Gebläsehauben genannten Motorhauben (31, 32) aufweist, wobei der Schritt /c/ des Verfahrens die Teilschritte aufweist:
/c1/ Schließen der Schubumkehrerhauben (21, 22),
/c2/ Schließen der Gebläsehauben (31, 32).

## Claims

1. Replacement device (10) intended to replace an aircraft engine (50) inside a propulsion unit (40) that also comprises a nacelle (20) and has a main axis (X), said nacelle comprising at least one pair of protective cowls (21, 22) for the engine, and the propulsion unit comprising an engine support pylon (42) having at least two engine attachments (43, 44), said protective cowls each being mounted so as to pivot about an axis (X1, X2) substantially parallel to the main axis, between an open position and a closed position,
the replacement device (10) comprising:
- a body (1) that extends along a first axis (A) and is designed to be positioned substantially parallel to the main axis (X), **characterized in that** the device comprises:
- at least two anchor points (2a, 2b) that are integral with the body and designed to be fixed to the engine attachments (43, 44) of the engine support pylon,
- bearing-surface portions (11, 12) on which the protective cowls can rest.

2. Replacement device according to Claim 1, wherein the bearing-surface portions (11, 12) are arranged substantially on an arc of a circle.

3. Replacement device according to either of Claims 1 and 2, wherein the pair of protective cowls forms a first pair of cowls referred to as reverser cowls (21, 22), having a first set of supporting portions (23, 24), and the nacelle comprises a second pair of cowls referred to as fan cowls (31, 32), having a second set of supporting portions (33, 34),
and/or wherein the bearing-surface portions (11, 12) of the replacement device (10) comprise a first set of bearing-surface portions (11a, 11b, 11c, 11d) designed to receive said supporting portions of the first set of supporting portions (23, 24) and a second set of bearing-surface portions (12a, 12b, 12c, 12d) designed to receive said supporting portions of the second set of supporting portions (33, 34).

4. Replacement device according to Claim 3, wherein the bearing-surface portions of the first set of bearing-surface portions are arranged substantially on an arc of a circle in a first transverse plane (P1) substantially perpendicular to the first axis (A), wherein the bearing-surface portions of the second set of bearing-surface portions are arranged substantially on an arc of a circle in a second transverse plane (P2) substantially perpendicular to the first axis.

5. Replacement device according to one of Claims 1 to 4, wherein the bearing-surface portions are at least partially retractable.

6. Replacement device according to one of Claims 1 to 5, which furthermore comprises a hydraulic unit (27) and cylinders (28), which are designed to connect the replacement device to at least the pair of cowls.

7. Replacement device according to one of Claims 1 to 6, which furthermore comprises wheels (15) and a drawbar (16).

8. Replacement device according to one of Claims 1 to 7, which is arranged in such a way that its centre of gravity (G) is located in the vicinity of the centre of gravity of the engine which it replaces in the propulsion unit.

9. Replacement device according to one of Claims 1 to 8, which furthermore comprises hoisting clevises (14).

10. Method for facilitating the movement of an aircraft intended to be driven by at least one turboshaft-engine propulsion unit having a nacelle, wherein at least one turboshaft engine has been placed on a propulsion unit, wherein said propulsion unit comprises a nacelle having at least two engine cowls (21, 22) that are mounted in a pivotable manner so as to provide access to the engine when they are open, said engine cowls being in their open position,
the method comprising the following steps of:
/a/- installing and fixing a replacement device (10) in the place of the turboshaft engine, the replacement device comprising at least two anchor points (2a, 2b) designed to be fixed to engine attachments (43, 44) of an engine support pylon (42), and bearing-surface portions (11, 12) on which the engine cowls can rest,
/c/- closing each engine cowl
/d/- enabling the movement of the aircraft.

11. Method according to Claim 10, wherein the replacement device (10) comprises a cylinder (28a, 28b, 29a, 29b) opposite each engine cowl, and wherein the method furthermore comprises the following step before step /c/:
/b/- attaching the cylinders to the respective opposite engine cowls.

12. Method according to either of Claims 10 and 11, wherein the nacelle (20) comprises a first pair of engine cowls referred to as reverser cowls (21, 22) and a second pair of engine cowls referred to as fan cowls (31, 32), step /c/ of the method comprising the substeps of:
/c1/- closing the reverser cowls (21, 22),
/c2/- closing the fan cowls (31, 32).
